# FASCICULE DE BREVET EUROPEEN

(11) **EP 1 614 865 B1**
(45) Date de publication et mention de la délivrance du brevet: **08.05.2013**
(21) Numéro de dépôt: 05106049.9
(22) Date de dépôt: 04.07.2005
(51) Int. Cl.: F01D 21/04, F02C 7/04, F02K 3/06, F01D 25/24

(54) **Raidisseur pour compresseur basse pression d'un moteur d'aéronef**
Aussteifung für den Niederdruckkompressor eines Flugtriebwerkes
Stiffener for the low pressure compressor of an aeroengine

(30) Priorité: 05.07.2004 FR 0451437
(43) Date de publication de la demande: 11.01.2006
(73) Titulaire: SNECMA, 75015 Paris (FR)
(72) Inventeur: MACE, Jérôme, 77000, MELUN (FR); LEJARS, Claude, 91210, DRAVEIL (FR); MAILLARD, Pierre-Yves, 77720, LA CHAPELLE GAUTHIER (FR); BUFFENOIR, François, 33600, PESSAC (FR); NICLOT, Thierry, 91600, SAVIGNY SUR ORGE (FR)
(74) Mandataire: Ahner, Philippe

(56) Documents cités:
- EP-A- 0 523 935
- EP-A- 1 403 486
- US-A- 5 409 349
- US-A- 6 145 300
- US-A1- 2004 063 504
- US-B1- 6 428 269

## Description

### DOMAINE TECHNIQUE

L'invention se rapporte aux moteurs d'aéronefs et notamment à la partie compresseur basse pression de ces moteurs.

Plus particulièrement, l'invention concerne des moyens pour diminuer les effets consécutifs aux vibrations et leur transmission entre le compresseur et la virole qui l'entoure.

### ÉTAT DE LA TECHNIQUE ANTÉRIEURE

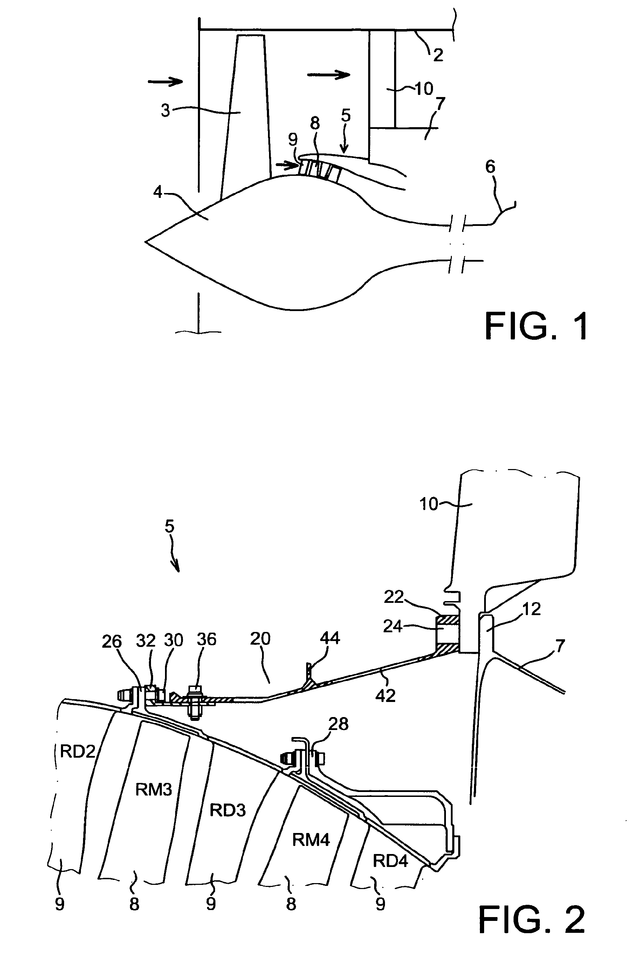

Tel que schématisé sur la figure 1, un réacteur 1 pour aéronef comporte principalement une virole 2, ou enveloppe circulaire, à l'intérieur de laquelle sont localisés différents composants du moteur. En particulier, en considérant le sens de déplacement de l'air (inverse au sens d'avancement de l'aéronef, c'est-à-dire de gauche à droite sur la figure), à l'entrée de la virole 2 se trouvent des aubes de soufflante 3 couplées à un arbre rotatif 4. Ensuite, reliés à l'arbre 4, se trouvent les différents étages de compression dont le premier compresseur 5 ; puis sont localisés différents éléments du moteur dont la turbine 6.

L'air entre dans la virole 2 où il est entraîné par les aubes 3. La majeure partie s'écoule par la partie de la virole 2 externe aux éléments de moteur 4, 5 pour assurer la propulsion. Une partie de l'air est aspirée par le premier compresseur 5 et dirigée vers la turbine 6 par l'intermédiaire d'autres éléments constitutifs du moteur.

Le premier compresseur 5 est ainsi un compresseur basse pression, comprenant une partie mobile et une partie fixe solidarisée au carter de moteur 7 ; plus particulièrement, et tel qu'il est connu, le compresseur est constitué d'une alternance de pales 8 couplées à l'arbre 4, et donc rotatives, et de redresseurs 9 couplés à la partie fixe du compresseur 5 afin de redresser l'air. Il reçoit l'air directement de l'extérieur, et fonctionne à une température comprise en général entre -50 et +50°C.

Pour solidariser l'ensemble à la virole 2 et éliminer les turbulences de l'air suite au passage des aubes 3, des bras raidisseurs 10 sont par ailleurs fixés à la virole 2 et fixés au carter 7 qui maintient le compresseur 5.

Le compresseur peut être carené par une structure acoustique augmentant sa rigidité : voir EP 1 403 486.

Des dispositifs de surveillance sont enfin présents afin de détecter les vibrations anormales des différentes parties entre elles, dont l'origine peut par exemple être un léger déséquilibrage ; classiquement, des alarmes sont déclenchées dès que la vibration atteint 2 ips (soit 50,8 mm/s).

Un exemple connu de ce type de moteur présente des dimensions atteignant un diamètre de la virole 2 de l'ordre de 4 m, avec une longueur totale de l'arbre 4 de l'ordre de 9 m, et un poids de l'ensemble atteignant 9 t. Par ailleurs, la distance séparant l'entrée du compresseur basse pression 5 et le bras raidisseur 10 est dans ce cas supérieure à 1 m : le compresseur 5 se trouve en porte-à-faux.

Un balourd minime localisé en aval de l'arbre 4, par exemple au niveau des turbines 6, peut être amplifié au niveau du compresseur basse pression 5 et atteindre des seuils critiques de vibration. En particulier, les spécifications de certains moteurs peuvent autoriser une vibration inférieure à 2 ips au niveau du carter intermédiaire 7 de moteur ; or l'expérience en exploitation a montré que cette vibration sur le carter 7 peut atteindre 25 ips au niveau du compresseur 5 dans certains cas de défectuosités. Ceci peut avoir des conséquences sur l'intégrité du compresseur, avec apparition possible de criques sur son enveloppe, en particulier au niveau des troisième et quatrième redresseurs. Une détection additionnelle de ces phénomènes n'est pas suffisante et n'apporte aucune solution pour contrer le problème.

Une refonte de la géométrie des moteurs existants est cependant inacceptable au vu de la complexité des moteurs, de la longueur des processus de certification,... De même, les impératifs liés au poids et à la résistance des pièces utilisées dans un avion empêchent l'utilisation de matériaux différents par exemple pour raidir les éléments de moteur concernés. Par ailleurs, pour les moteurs déjà commercialisés, il est souhaitable de prévoir une solution qui puisse être adaptée facilement sans nécessiter de modification profonde de l'appareil.

### EXPOSÉ DE L'INVENTION

La présente invention se propose parmi autres avantages de remédier au problème de balourd possible au niveau du compresseur basse pression en évitant toute modification des moteurs existants. En particulier, l'invention concerne des moyens pour raidir l'ensemble supportant le compresseur basse pression tout en ne modifiant pas les moteurs en place et, en particulier, en gardant le découpage modulaire de l'ensemble compresseur.

Sous un de ses aspects, l'invention concerne un raidisseur, qui se positionne entre le compresseur basse pression et le carter, de préférence au niveau du bras structural solidaire de la virole, et au niveau de la face amont du troisième redresseur du compresseur basse pression.

Le raidisseur est de préférence en aluminium, ajouré, afin de limiter l'augmentation de poids inhérente à la présence de pièces supplémentaires sur le moteur. Le raidisseur est avantageusement constitué de deux parties qui sont fixées, de préférence par l'intermédiaire de vis/écrous à rivets, l'une à l'autre afin de faciliter la mise en place et de conserver la méthode d'assemblage prédéterminée d'un compresseur modulaire dans la virole.

Avantageusement, plusieurs raidisseurs, par exemple cinq, sont utilisés, répartis régulièrement autour de la périphérie du compresseur.

### BRÈVE DESCRIPTION DES DESSINS

D'autres caractéristiques et avantages de l'invention apparaîtront à la lecture de la description détaillée qui suit. Les figures des dessins annexés permettront certes de mieux comprendre l'invention, mais ne sont données qu'à titre indicatif et ne sont nullement restrictives.

La figure 1, déjà décrite, présente un schéma illustrant partiellement le fonctionnement d'un moteur d'aéronef existant.

La figure 2 représente un agrandissement d'un détail de la figure 1, comprenant en outre un raidisseur conforme à un mode de réalisation préférée de l'invention.

La figure 3 montre la répartition préférée des raidisseurs autour du compresseur.

La figure 4 présente un mode de réalisation préférée de la partie avant d'un raidisseur selon l'invention.

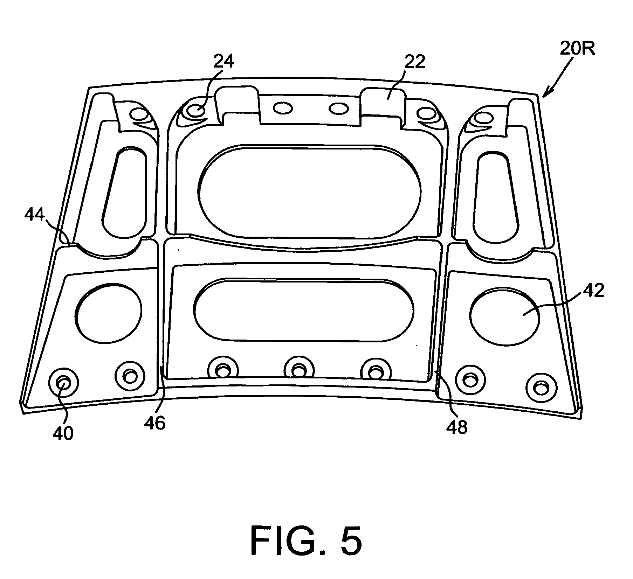

La figure 5 présente un mode de réalisation préférée de la partie arrière d'un raidisseur selon l'invention.

### EXPOSÉ DÉTAILLÉ DE MODES DE RÉALISATION PARTICULIERS

Tel que décrit précédemment en référence à la figure 1, le compresseur basse pression 5 d'un moteur 1 pour aéronef est localisé autour de l'arbre 4 du moteur et à l'intérieur de la virole 2.

Tel qu'il l'est plus clair sur la figure 2, le compresseur basse pression 5 comporte une succession de redresseurs 9, couramment référencés RD dans le domaine aéronautique, le premier redresseur RD1 se localisant à l'entrée du compresseur 5, c'est-à-dire du côté par lequel l'air entre dans le compresseur ; on trouve un certain nombre de redresseurs suivant la gamme du moteur, dans le cadre représenté quatre redresseurs RD1 à RD4. Entre chaque redresseur 9 se trouve une pale 8, ou roue mobile, solidarisée à l'arbre 4. La première roue mobile RM1 est localisée en aval du premier redresseur RD1, c'est-à-dire entre le premier redresseur RD1 et le deuxième RD2, et ainsi de suite ; dans le cadre représenté, il y a quatre pales RM1 à RM4.

Le bras structural 10 permettant de maintenir le compresseur basse pression 5 et l'ensemble du moteur au sein de la virole 2 est classiquement monté en aval du dernier redresseur RD4, c'est-à-dire connecté au carter intermédiaire 7 séparant compresseur basse pression 5 et module haute pression, par l'intermédiaire d'un ensemble de brides 12, à l'extrémité du compresseur basse pression 5 proprement dit.

Pour un moteur du type dont les dimensions ont été précisées plus haut, la distance séparant l'extrémité d'entrée du compresseur basse pression 5 du point d'ancrage du bras structural 10 est de l'ordre de 1,20 m, l'épaisseur de la paroi du compresseur 5 supportant les redresseurs 9 étant de 4 mm voire moins.

Selon les conditions d'utilisation du moteur, et en particulier lorsque l'avion sur lequel il est monté est soumis à de fréquents atterrissages et décollages qui sollicitent fortement les pièces mécaniques, il peut s'avérer souhaitable de rigidifier l'ensemble constitué par le compresseur basse pression 5, le carter 7, la virole 2 et les bras raidisseurs 10, afin d'augmenter sa tolérance aux vibrations de l'arbre 4 et des différentes parties 3, 8,... qui en sont solidaires, ainsi que le balourd ainsi engendré. En particulier, il s'avère que la paroi de la partie fixe du compresseur 5, notamment au niveau du quatrième redresseur RD4, est fragile.

L'invention vise à augmenter la rigidité de l'ensemble par sa triangulation : au moins un raidisseur 20 est solidarisé au carter 7 et à l'enveloppe du compresseur 5 pour limiter les effets de porte-à-faux inhérents à la construction et au fonctionnement du compresseur et du moteur.

Comme les problèmes concernant le poids sont critiques en aéronautique, il est souhaitable que chaque raidisseur soit le plus léger possible ; en particulier, il est souhaitable de choisir le matériau pour alléger la structure. Si le titane est envisageable pour fabriquer les raidisseurs 20, il a ainsi été montré que l'aluminium était une solution de choix : une optimisation de la structure permet à un raidisseur 20 en aluminium, bien que ce matériau soit très léger, d'atteindre les résultats escomptés.

Avantageusement, une pluralité de raidisseurs 20 est utilisée, chacun des raidisseurs 20 étant localisé de façon régulière autour de l'axe du compresseur. Ceci permet une meilleure répartition des forces de traction et donc de pallier les effets des balourds pour toutes les directions, tout en ne compliquant pas de façon rédhibitoire la fabrication et le montage des raidisseurs 20.

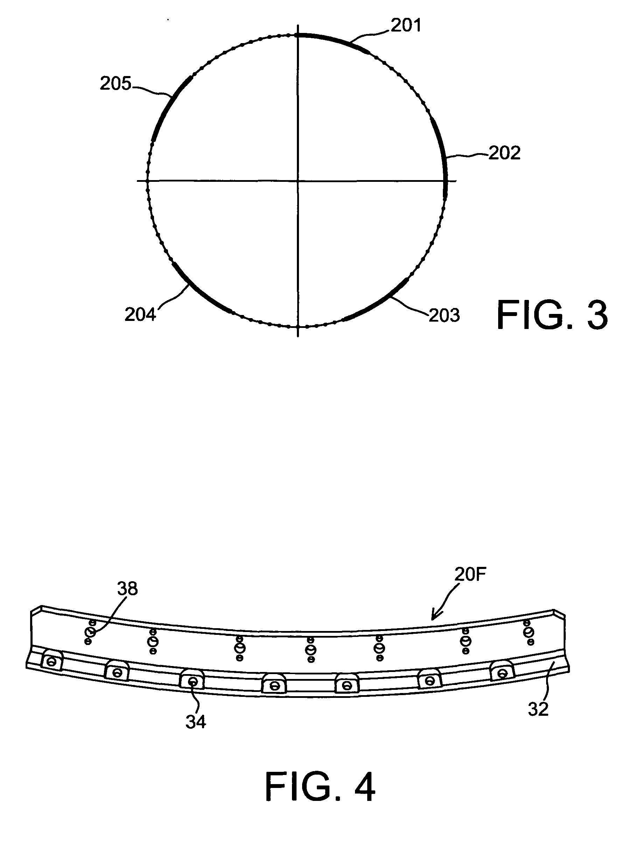

En particulier, la présence de cinq raidisseurs 201-205 s'étendant chacun sur environ 30° d'angle et répartis de façon homogène s'est avérée suffisante pour contenir une vibration de l'ordre de 10-15 ips sur un moteur de grandes dimensions ; la répartition préférée en est illustrée figure 3. La forme générale des raidisseurs est donc en trapèze, de préférence régulier, les deux côtés opposés parallèles étant solidarisés respectivement au compresseur 5 et au carter 7. La courbure inhérente à la localisation sur un arc d'angle de 30° du raidisseur 20 reste minime au vu des dimensions en question et n'implique pas de conditions de fabrication spécifiques et compliquées. En particulier, la longueur du côté du raidisseur qui est connecté au compresseur 5 est pour un moteur tel que décrit plus haut de l'ordre de 350 à 500 mm, par exemple 435 mm, la longueur du côté du raidisseur qui est connecté au carter 7 de l'ordre de 240 à 350 mm, par exemple 255 mm, pour une épaisseur moyenne de 4 mm à 10 mm.

Ce choix s'explique également en particulier du point de vue des attaches, tel qu'il apparaîtra plus clairement par la suite. Il est préférable que chacun des raidisseurs 201-205 soit identique aux autres, tant pour des économies d'échelle que pour des facilités de montage. Pour des raisons de symétrie dans le positionnement des moyens de fixation entre raidisseur 20 et compresseur 5 et/ou carter 7, et en considération des trous permettant le passage de vis présents dans ces derniers éléments (que l'on peut identifier par leur numéro d'ordre sur la figure 3), le choix de cinq raidisseurs 20 offre un avantage supplémentaire. Dans ce cas illustré sur la figure 2 et présenté avec plus de détails ci-dessous, chaque raidisseur 20 est fixé au carter intermédiaire 7 par six vis, et à une bride présente entre les deuxième et troisième redresseurs RD2, RD3 par sept vis. D'autres solutions sont possibles.

Pour éviter les problèmes inhérents à la circulation d'un flux important d'air entre la virole 2 et le compresseur 5, il est souhaitable de fixer le raidisseur 20 le plus près possible de l'axe, tout en assurant une triangulation. A cet effet, il est donc préconisé de fixer le raidisseur au niveau du bras structural 10. Comme en outre des moyens de fixation 12 sont déjà présents sur le carter 7 afin d'y solidariser le bras structural 10, il est souhaitable d'ancrer le raidisseur à ce niveau. Avantageusement, sur ce premier côté 22 du raidisseur 20 fixé sur le carter 7, des moyens de fixation 24 sous la forme de trous (comme expliqué plus haut, six dans le cas de cinq raidisseurs 201-205) sont disposés : ils permettent d'utiliser des vis classiques de fixation pour connecter raidisseur 20 et bras structural 10. Une autre possibilité concerne la présence de moyens de fixation 24 susceptibles d'être par exemple percés au moment du montage ; ceci permet un ajustage précis même dans le cas où l'alignement avec les trous existant de la bride 12 n'est pas optimisé lors du positionnement.

Il est par ailleurs souhaitable de modifier le moins possible les moteurs existants et de ne pas ajouter de pièces supplémentaires. Un compresseur basse pression 5, contrairement au schéma illustratif de la figure 1, comporte déjà sur sa périphérie de nombreux éléments susceptibles d'être utilisés pour y fixer les raidisseurs 20, tel qu'il apparaît sur la figure 2. En particulier, dans un compresseur modulaire, des modules ou étages comprenant chacun un redresseur 9 sont joints bout à bout, par des brides positionnées entre chaque étage du compresseur. La bride 26 positionnée entre les redresseurs RD2 et RD3 est notamment susceptible d'être utilisée pour fixer le raidisseur 20. Cette bride 26 offre l'avantage de permettre une triangulation sans souci majeur concernant les autres éléments du moteur : la bride 28 par exemple, localisée en amont du redresseur RD4, si elle permet de fabriquer un redresseur de longueur inférieure, entraînerait des difficultés de montage au vu des différents éléments du moteur (non représentés) qui y sont déjà solidarisés ; la première bride (non illustrée) quant à elle ne permet pas une triangulation optimale lorsque le raidisseur 20 est relié au niveau 24 du bras structural 10. La longueur entre premier et deuxième côté d'un raidisseur 20 ainsi localisé entre la bride 12 et la bride 26 est de l'ordre de 240 à 300 mm, par exemple 265 mm.

Avantageusement, chaque raidisseur 20 est donc fixé à une de ses extrémités à la bride 26 au niveau de la face amont du redresseur RD3, de préférence par l'intermédiaire de vis 30. Le raidisseur présente alors sur ce deuxième côté 32 des trous 34 (au nombre de sept par exemple, dans le mode de réalisation présenté plus haut), ou d'autres moyens de fixation comme précisé pour le premier côté 22. Pour chacun de ces côtés 22, 32, les vis utilisées sont classiques en aéronautique.

Par ailleurs, les dimensions de la virole 2 et des étages du compresseur 5 sont telles que la méthode d'assemblage a été définie avec précision, afin de minimiser les aléas dus au transport et au montage. En particulier, chaque étage du compresseur modulaire 5 est d'abord assemblé ; de façon indépendante, la virole 2 est solidarisée au carter 7 par l'intermédiaire des bras structuraux 10.

Afin de ne pas modifier la procédure d'assemblage existant tout en autorisant une triangulation efficace, il est donc préférable de fabriquer chaque raidisseur 20 en deux parties qui seront ensuite solidarisées de façon inamovible. A cet égard, le raidisseur 20 comporte donc une première pièce, ou raidisseur arrière 20R, qui contient le premier côté 22 du raidisseur avec ses moyens de fixation 24, et une deuxième pièce 20F, ou raidisseur avant, contenant le deuxième côté 32. Les deux pièces 20R, 20F sont solidarisées entre elles par tout moyen connu, et de préférence par l'intermédiaire de vis 36 ; avantageusement et pour simplifier le montage, des vis/écrous à rivets sont utilisées, par exemple en Inconel® ou en alliage Z10, entre autres alliages couramment utilisés en aéronautique pour cette gamme de température (la température oscille à cet endroit entre -50 et +50°C) et de traction.

Il a été modélisé que la seconde pièce 20F est de préférence sous la forme d'un L (voir figure 4). Le petit côté comprend les moyens de fixation 34 pour la bride 26 (c'est-à-dire qu'il correspond au deuxième côté 32 du raidisseur 20), et est d'une largeur de l'ordre de 15 à 50 mm, de préférence 40 mm pour une longueur maximale du deuxième côté de 435 mm ; le grand côté est orienté selon un angle sensiblement égal à 90°, de largeur comprise entre 40 et 75 mm, par exemple 60 mm, pour décroître par exemple à une longueur de 415 mm et comprend des trous 38, avantageusement sept, destinés aux vis de liaison 36 entre première et deuxième parties du raidisseur 20. Pour mettre le raidisseur 20 en place, avantageusement, cette seconde pièce 20F est fixée sur la bride 26 du compresseur 5 lors de l'assemblage des différents modules et avant insertion dans la virole 2.

Le raidisseur arrière 20R est de forme plus complexe et représente la majeure partie, du point de vue dimensions, du raidisseur 20. Il possède de préférence une forme sensiblement trapézoïdale, arquée autour d'un tronc de cône tel que précisé auparavant (référence est faite à la figure 3). De préférence, le trapèze est isocèle régulier, c'est-à-dire que les côtés non parallèles du trapèze sont symétriques. Le grand côté du trapèze est avantageusement connecté au raidisseur avant 20F, et possède donc également sept trous 40 pour les vis de liaison 36 sur une longueur de l'ordre de 350 à 450 mm, par exemple 415 mm ; lors de l'assemblage du compresseur, il est relié au raidisseur avant 20F une fois le compresseur 5 en place. Grâce à la forme en L du raidisseur avant 20F, la liaison entre les deux parties du raidisseur 20 peut se faire selon une direction perpendiculaire à l'axe de la virole 2, ce qui simplifie la manoeuvre.

Le petit côté du trapèze de la première pièce 20R, ou premier côté 22 du raidisseur 20, d'une longueur entre 240 et 350 mm, par exemple de l'ordre de 255 mm et distant d'environ 200 à 260 mm, par exemple 240 mm du grand côté, peut être fixé directement au carter 7 par l'intermédiaire des trous 24, avant la fixation du compresseur 5 auquel a été solidarisé le raidisseur avant 20F, sur la bride 12 du carter 7.

La géométrie du raidisseur arrière 20R est par ailleurs de préférence optimisée pour assurer un poids minimal. Ainsi, il est souhaitable que le trapèze possède des parties ajourées 42 délimitées par des parties de renfort 44, 46, 48. En particulier dans le cadre de l'aluminium, il est souhaitable de concevoir une protubérance 44 parallèle aux côtés parallèles du trapèze et sensiblement en leur centre afin d'absorber les efforts. Cette protubérance peut par exemple faire 1,5 à 5 mm d'épaisseur et 20 à 50 mm, par exemple 30 mm, de hauteur, tout au long de la longueur traversée du trapèze. Deux protubérances 46, 48 perpendiculaires à la protubérance centrale 44 peuvent également traverser le trapèze selon sa hauteur, de préférence séparées de 150 à 220 mm, par exemple 185 mm, et symétriques par rapport à la médiane du trapèze.

Par ailleurs, il a été modélisé que, pour un montage optimal, il était souhaitable que le raidisseur arrière 20R possède une ligne de pliure localisée sensiblement au milieu entre le renfort central 44 et le côté destiné à la liaison avec le raidisseur avant 20F. L'angle créé par cette pliure est de l'ordre de 10-20°, de préférence 15° (voir figure 2).

Le raidisseur 20 est donc un élément facile à fabriquer et composé d'un matériau peu onéreux et léger. Cette solution simple a prouvé sa capacité à limiter les effets négatifs voire dégâts matériels causés par les balourds au niveau du compresseur basse pression 5, augmentant par là-même la sécurité. La mise en place des raidisseurs 201-205 a été optimisée pour ne pas occasionner de coûts de maintenance supplémentaires.

Bien que décrite préférentiellement pour une utilisation sur des moteurs de grande taille, pour lesquels ces problèmes peuvent devenir critiques au vu des dimensions et poids engagés par le réacteur, cette solution peut s'appliquer à tout autre moteur double flux et/ou double corps possédant une architecture similaire : une modélisation des dimensions des pièces et localisations des moyens de fixation permettra une adaptation d'un raidisseur selon l'invention.

## Revendications

1. Raidisseur (20) pour rigidifier la partie compresseur basse pression (5) d'un moteur d'aéronef (1) **caractérisé en ce qu'**il comprend un élément de forme trapézoïdale, le premier côté (22) du trapèze comprenant des premiers moyens de fixation (24) aptes à être connectés au carter (7) du moteur, le deuxième côté (32) du trapèze, sensiblement parallèle et opposé au premier côté (22), comprenant des deuxièmes moyens de fixation (34) aptes à être connectés au compresseur basse pression (5) du moteur, les premier et deuxième côtés (22, 32) étant, dans le sens de leur longueur, en forme d'arc de cercle et définissant une surface extraite d'un tronc de cône.

2. Raidisseur selon la revendication 1 composé d'aluminium.

3. Raidisseur selon l'une des revendications 1 à 2 dans lequel la distance selon une normale séparant le premier (22) et le deuxième côté (32) est de l'ordre de 265 mm.

4. Raidisseur selon l'une des revendications 1 à 3 dans lequel le premier côté (22) a une longueur de l'ordre de 255 mm et le deuxième côté (32) ayant une longueur de l'ordre de 435 mm.

5. Raidisseur selon l'une des revendications 1 à 4 dans lequel les moyens de fixation (24, 34) sont des trous.

6. Raidisseur selon la revendication 5 dans lequel les premiers moyens de fixation (24) sont composés de six trous, et les deuxièmes moyens de fixation (34) sont composés de sept trous.

7. Raidisseur selon l'une des revendications 1 à 6 dans lequel l'élément trapézoïdal est composé de deux pièces indépendantes (20R, 20F) susceptibles d'être fixées ensemble, une première pièce (20R) comprenant le premier côté (22), et une deuxième pièce (20F) comprenant le deuxième côté (32).

8. Raidisseur selon la revendication 7 dans lequel la première pièce (20R) est en forme sensiblement de trapèze isocèle, et la deuxième pièce (20F) présente en coupe une forme sensiblement en L.

9. Raidisseur selon la revendication 8 dans lequel la distance séparant le premier côté (22) du côté opposé de la première pièce (20R) selon une normale a une longueur de l'ordre de 240 mm.

10. Raidisseur selon l'une des revendications 7 à 9 dans lequel chacune des première et deuxième pièces (20R, 20F) comprend sur le côté opposé aux respectivement premier et deuxième côtés (22, 32) des moyens (40, 38) pour fixer les deux pièces ensemble.

11. Raidisseur selon la revendication 10 dans lequel les moyens pour fixer (38, 40) sont constitués de trous, et comprenant en outre des vis (36) pour fixer les deux pièces (20R, 20F) par l'intermédiaire desdits trous (38, 40).

## Patentansprüche

1. Aussteifung (20) zum Versteifen des Niederdruckverdichterteils (5) eines Flugzeugtriebwerks (1), **dadurch gekennzeichnet, dass** sie ein trapezförmiges Element umfasst, wobei die erste Seite (22) des Trapezes erste Befestigungsmittel (24) unfasst, die geeignet sind, mit dem Gehäuse (7) des Triebwerks verbunden zu werden, wobei die zweite Seite (32) des Trapezes, die zu der ersten Seite (22) im Wesentlichen parallel ist und dieser gegenüberliegt, zweite Befestigungsmittel (34) umfasst, die geeignet sind, mit dem Niederdruckverdichter (5) des Triebwerks verbunden zu werden, wobei die erste und die zweite Seite (22, 32) in Richtung ihrer Länge kreisbogenförmig ausgebildet sind und eine einem Kegelstumpf entnommene Fläche definieren.

2. Aussteifung nach Anspruch 1, die aus Aluminium besteht.

3. Aussteifung nach einem der Ansprüche 1 bis 2, wobei der Abstand -entlang einer Normalen- zwischen der ersten (22) und der zweiten Seite (32) in der Größenordnung von 265 mm liegt.

4. Aussteifung nach einem der Ansprüche 1 bis 3, wobei die erste Seite (22) eine Länge in der Größenordnung von 255 mm aufweist und wobei die zweite Seite (32) eine Länge in der Größenordnung von 435 mm hat.

5. Aussteifung nach einem der Ansprüche 1 bis 4, wobei die Befestigungsmittel (24, 34) Löcher sind.

6. Aussteifung nach Anspruch 5, wobei die ersten Befestigungsmittel (24) aus sechs Löchern bestehen und die zweiten Befestigungsmittel (34) aus sieben Löchern bestehen.

7. Aussteifung nach einem der Ansprüche 1 bis 6, wobei das trapezförmige Element aus zwei unabhängigen Teilen (20R, 20F) besteht, die geeignet sind, aneinander befestigt zu werden, wobei ein erstes Teil (20R) die erste Seite (22) und ein zweites Teil (20F) die zweite Seite (32) umfasst.

8. Aussteifung nach Anspruch 7, wobei das erste Teil (20R) im Wesentlichen die Form eines gleichschenkligen Trapezes aufweiset und das zweite Teil (20F) im Schnitt im Wesentlichen L-förmig ausgebildet ist.

9. Aussteifung nach Anspruch 8, wobei der Abstand, der die erste Seite (22) von der gegenüberliegenden Seite des ersten Teils (20R) entlang einer Normalen trennt, eine Länge in der Größenordnung von 240 mm aufweist.

10. Aussteifung nach einem der Ansprüche 7 bis 9, wobei ein jedes der ersten und zweiten Teile (20R, 20F) auf der der ersten bzw. der zweiten Seite (22, 32) gegenüberliegenden Seite Mittel (40, 38) zum Befestigen der beiden Teile aneinander umfasst.

11. Aussteifung nach Anspruch 10, wobei die Mittel zum Befestigen (38, 40) von Löchern gebildet sind, und ferner umfassend Schrauben (36) zum Befestigen der beiden Teile (20R, 20F) über die Löcher (38, 40).

## Claims

1. Stiffener (20) to stiffen the low pressure compressor (5) part of an engine aircraft (1), **characterized in that** it comprises a trapezoidal shaped element, the first side (22) of the trapezium comprising the first attachment means (24) that can be connected to the engine casing (7), the second side (32) of the trapezium, approximately parallel to and opposite the first side (22), comprising second attachment means (34) that can be connected to the engine low pressure compressor (5), the first and second sides (22, 32) being in the direction of their length, along the line of a circle and defining a surface extracted from a truncated cone.

2. Stiffener according to claim 1 made of aluminum.

3. Stiffener according to either claim 1 or 2, in which the distance along a normal separating the first side (22) and the second side (32) is of the order of 265 mm.

4. Stiffener according to any one of claims 1 to 3 in which the first side (22) has a length of the order of 255 mm and the second side (32) has a length of the order of 435 mm.

5. Stiffener according to any one of claims 1 to 4 in which the attachment means (24, 34) are holes.

6. Stiffener according to claim 5 in which the first attachment means (24) are composed of six holes and the second attachment means (34) are composed of seven holes.

7. Stiffener according to any one of claims 1 to 6 in which the trapezoidal element is made of two independent parts (20R, 20F) that can be fixed together, a first part (20R) comprising the first side (22), and a second part (20F) comprising the second side (32).

8. Stiffener according to claim 7 in which the shape of the first part (20R) is approximately an isosceles trapezium, and the second part (20F) has an approximately L shaped cross-section.

9. Stiffener according to claim 8 in which the distance separating the first side (22) from the side opposite the first part (20R) along a normal is of the order of 240 mm.

10. Stiffener according to any one of claims 7 to 9 in which each of the first and second parts (20R, 20F) comprises means (40, 38) to fix the two parts together on the side opposite the first and second sides (22, 32) respectively.

11. Stiffener according to claim 10 in which the attachment means (38, 40) are composed of holes and also comprise screws (36) to fix the two parts (20R, 20F) through the said holes (38, 40).
